(19) Europäisches Patentamt
European Patent Office
Office européen des brevets

(11) Veröffentlichungsnummer: **0 036 533**
**B1**

(12) # EUROPÄISCHE PATENTSCHRIFT

(45) Veröffentlichungstag der Patentschrift: **27.06.84**

(51) Int. Cl.³: **C 09 B 62/03**, D 06 P 3/66, D 06 P 3/10

(21) Anmeldenummer: **81101623.7**

(22) Anmeldetag: **06.03.81**

(54) **Farbstoffe, Verfahren zu ihrer Herstellung sowie ihre Verwendung zum Färben hydroxylgruppen- oder stickstoffhaltiger Materialien.**

(30) Priorität: **17.03.80 DE 3010161**

(43) Veröffentlichungstag der Anmeldung: **30.09.81 Patentblatt 81/39**

(45) Bekanntmachung des Hinweises auf die Patenterteilung: **27.06.84 Patentblatt 84/26**

(84) Benannte Vertragsstaaten: **BE CH DE FR GB IT LI**

(56) Entgegenhaltungen:
**CH - A - 367 258**
**FR - A - 1 563 661**
**FR - A - 2 423 520**
**FR - A - 2 429 244**

**"The Chemistry of Synthetic Dyes" Band VI (1972) Seiten 121, 141 von by K. Venkataraman (Academic Press)**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schündehütte, Karl Heinz, Dr., Klief 75, D-5090 Leverkusen 3 (DE)**
Erfinder: **Henk, Hermann, Dr., Roggendorfstrasse 55, D-5000 Köln 80 (DE)**

**EP 0 036 533 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft neue Farbstoffe der allgemeinen Formel

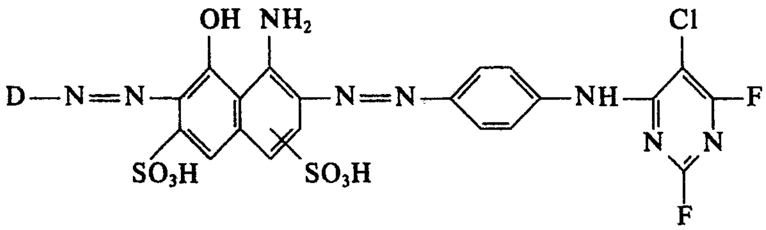 (I)

worin

D für einen gegebenenfalls substituierten Benzol- oder Naphthalinrest steht.

Bevorzugt sind Farbstoffe der allgemeinen Formel (I), worin

D für Phenyl steht, welches gegebenenfalls durch eine oder zwei Sulfogruppen, Aminosulfonyl, Carboxy, Aminocarbonyl, $C_1-C_4$-Alkoxycarbonyl, $C_1-C_4$-Alkyl, $C_1-C_4$-Alkoxy, Halogen, $C_1-C_4$-Alkylcarbonylamino, Benzoylamino, durch gegebenenfalls substituiertes Phenyl, gegebenenfalls substituiertes Naphthylazo-, gegebenenfalls Phenylazo- oder durch gegebenenfalls substituiertes 2-Benzothiazolyl substituiert ist oder für Naphthyl steht, welches gegebenenfalls durch $C_1-C_4$-Alkoxy, Hydroxy, eine bis drei Sulfogruppen substituiert ist.

Insbesondere bevorzugt ist der Farbstoff der Formel:

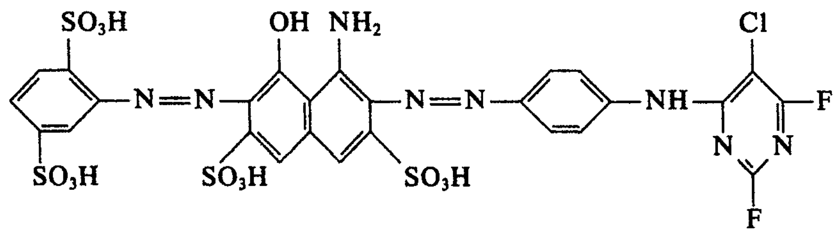

Aus der Patentschrift FR-A 15 63 661 sind ähnlich strukturierte Farbstoffe bekannt, die jedoch die für die erfindungsgemäßen Farbstoffe kennzeichnenden Gruppierung

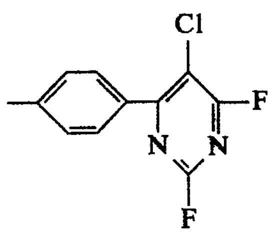

nicht aufweisen und in den färberischen Eigenschaften unterlegen sind.

Die Verbindungen der Formel (I) werden beispielsweise wie folgt hergestellt:

p-Nitranilin wird diazotiert, mit einer 8-Amino-1-hydroxy-naphthalindisulfonsäure der Formel

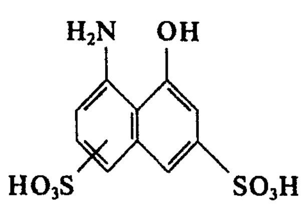

zu einer Verbindung der Formel

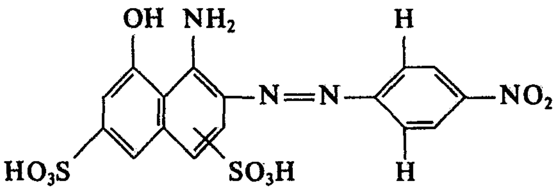

in saurem Medium gekuppelt, und diese Azoverbindung wird mit der aus D-$NH_2$ hergestellten Diazoniumverbindung

$$D-\underset{\oplus}{N}\equiv N \qquad X^{\ominus}$$

($X^{\ominus}$ anionischer Rest)

im neutralen bis alkalischen Medium zur Disazoverbindung der Formel

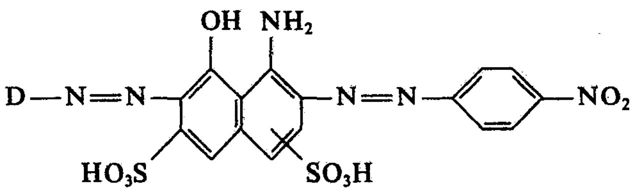

gekuppelt,
die Nitrogruppen der Verbindung zur Aminogruppe reduziert und die dabei entstehende Verbindung der Formel

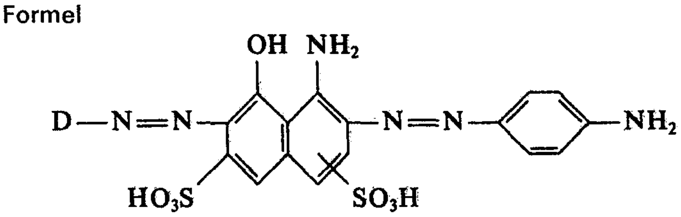

mit 2,4,6-Trifluor-5-chlor-pyrimidin umgesetzt.

Als diazotierbare Amine D-$NH_2$ seien beispielsweise genannt:

1-Aminobenzol,
1-Aminobenzol-2-, -3- oder 4-sulfonsäure,
1-Aminobenzol-2,4-, -2,5- oder -3,5-disulfonsäure,
1-Amino-4-methylbenzol-2-sulfonsäure,
1-Amino-3-methylbenzol-6-sulfonsäure,
1-Amino-6-methylbenzol-3- oder -4-sulfonsäure,
1-Amino-4-methylbenzol-3-sulfonsäure,
1-Amino-2-methylbenzol-3-sulfonsäure,
1-Amino-2,4-dimethylbenzol-6-sulfonsäure,
1-Amino-4- oder -5-chlorbenzol-2-sulfonsäure,
1-Amino-6-chlorbenzol-3- oder -4-sulfonsäure,
1-Amino-4-chlorbenzol-3-sulfonsäure,
1-Amino-2,4-dichlorbenzol-6-sulfonsäure,
1-Amino-2,5-dichlorbenzol-4-sulfonsäure,
1-Amino-5-methyl-4-chlorbenzol-2-sulfonsäure,
1-Amino-2-methyl-4-chlorbenzol-2-sulfonsäure,
1-Amino-2-methyl-6-chlorbenzol-4-sulfonsäure,
1-Amino-4- oder -5-methoxybenzol-2-sulfonsäure,
1-Amino-6-methoxybenzol-3- oder -4-sulfonsäure,
1-Amino-6-ethoxybenzol-3- oder -4-sulfonsäure,
1-Amino-2,4-dimethoxybenzol-6-sulfonsäure,
1-Amino-2,5-dimethoxybenzol-4-sulfonsäure,
1-Amino-3-acetylaminobenzol-6-sulfonsäure,
1-Amino-4-acetylaminobenzol-2-sulfonsäure,
1-Amino-3-acetylamino-4-methylbenzol-6-sulfonsäure,
1-Amino-4-methoxybenzol-2,5-disulfonsäure,
1-Amino-4-methyl-2,5-disulfonsäure,
1-Amino-2-carboxy-4- oder -5-sulfonsäure,
1-Aminonaphthalin-2-, -3-, -4-, -5-, -6-, -7- oder -8-sulfonsäure,
2-Aminonaphthalin-1-, -5-, -6-,-7- oder -8-sulfonsäure,

1-Amino-naphthalin-2,4-, -3,6-, -3,7-,-3,8-, -4,6-, -4,7-, -4,8-, -5,7- oder -6,8-disulfonsäure,
2-Aminonaphthalin-1,5-, -3,6-, -3,7-, -4,8-, -5,7- oder 6,8-disulfonsäure,
1-Aminonaphthalin-2,4,6-, 2,4,7-, -3,6,8- oder -4,6,8-trisulfonsäure,
2-Aminonaphthalin-1,5,7-, -3,6,8- oder -4,6,8-trisulfonsäure,
2-(4-Aminophenyl)-6-methyl-benzothiazol-sulfonsäure,
2-(4-Amino-3-sulfophenyl)-6-methyl-7-benzothiazol-sulfonsäure,
4-Aminoazobenzol,
4-Aminoazobenzol-4'-sulfonsäure,
4-Aminoazobenzol-3,4'-disulfonsäure.

Die Herstellung der erfindungsgemäßen Farbstoffe und Farbstoffzwischenprodukte erfolgt vorzugsweise in wäßrigem Medium.

Die Reduktion der Nitrogruppen wird nach literaturbekannten Verfahren durchgeführt, z. B. durch katalytische Hydrierung, elektrolytische Reduktion sowie Umsetzung mit geeigneten Reduktionsmitteln, siehe z. B. R. Schröter in Houben—Weyl, Band XI/1, Seiten 360—515 (1957).

Die Umsetzung mit 2,4,6-Trifluor-5-chlorpyrimidin erfolgt bei schwach saurem bis schwach alkalischem pH-Wert. Die bei der Kondensation frei werdende Fluorwasserstoffsäure wird durch Zugabe von verdünnter Alkalihydroxid- bzw. -carbonat- oder -bicarbonat-Lösung neutralisiert.

Die Erfindung betrifft schließlich die Verwendung der Farbstoffe der Formel (I) zum Färben von Hydroxyl- und/oder stickstoffhaltiger Materialien.

Die erfindungsgemäßen Farbstoffe eignen sich insbesondere zum Färben und Bedrucken von Wolle, insbesondere Polyamid und Leder, Zellwolle, regenerierter Cellulose, vor allem aber Baumwolle.

Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

Beispiel 1

60,5 Teile 4-Nitranilin werden in 1000 Teilen Wasser und 140 Teilen 30%iger Salzsäure verrührt und bei ca. 10°C mit 100 Teilen 30%iger Nitritlösung versetzt. Die so erhaltene Diazolösung gibt man zu einer Suspension von 167 Teilen 8-Amino-1-hydroxynaphthalin-3,6-disulfonsäure in 1000 Teilen Wasser von ca. 10°C. Die 1. Kupplung ist nach ca. 10 Stunden beendet.

171,7 Teile 1-Aminobenzol-2,5-disulfonsäure werden in 300 Teilen Wasser mit Natronlauge neutral gelöst, mit Eis auf 0—5°C gekühlt, mit 140 Teilen 30%iger Salzsäure und anschließend mit 110 Teilen 30%iger Nitritlösung versetzt. Die so erhaltene Diazosuspension gibt man zur 1. Kupplung und stellt langsam mit 280 Teilen 40%iger Natronlauge den pH-Wert auf 9. Die 2. Kupplung ist rasch beendet.

Diese Farbstofflösung wird mit ca. 80 Teilen technischem Natriumsulfid versetzt. Die Reduktion ist leicht exotherm und rasch beendet.

Zur Ausfällung des Aminodisazofarbstoffes wird mit 250 Teilen 30%iger Salzsäure und mit 20% Salz versetzt.

Die so erhältliche Farbstoffpaste wird in 1000 Teilen heißem Wasser mit Soda gelöst, heiß filtriert und anschließend mit 52 Vol.-Teilen 2,4,6-Trifluor-5-chlorpyrimidin versetzt. Mit 70 Vol.-Teilen 20%iger Sodalösung wird der pH-Wert im Bereich von 5—7 gehalten, bis die Kondensation beendet ist. Nach beendeter Umsetzung, die sich gut chromatographisch verfolgen läßt, wird der Farbstoff durch Zugabe von Salz isoliert. Nach dem Trocknen und Mahlen erhält man ein dunkles Farbstoffpulver, das Baumwolle aus wäßriger Flotte in echten grünstichigem Schwarz färbt.

Der Farbstoff entspricht in Form der freien Säure der Formel:

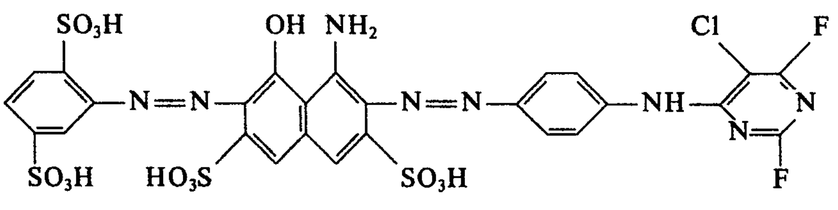

In analoger Weise wurde das folgende Beispiel hergestellt:

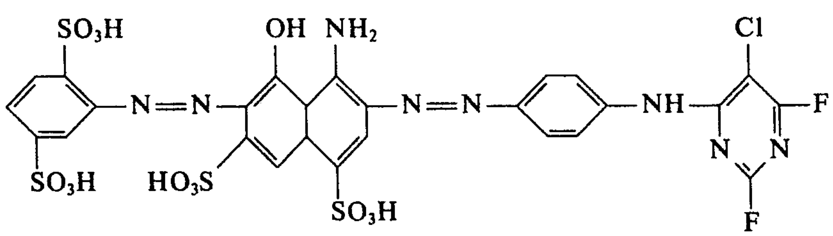

**Patentansprüche**

1. Farbstoffe der allgemeinen Formel

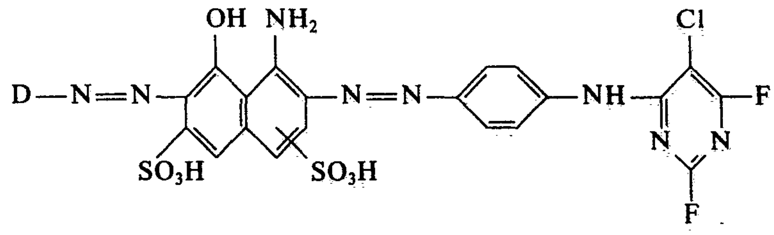

worin

D für einen gegebenenfalls substituierten Benzol- oder Naphthalinrest steht.

2. Farbstoffe der allgemeinen Formel gemäß Anspruch 1, worin

D für Phenyl steht, welches gegebenenfalls durch eine oder zwei Sulfogruppen, Aminosulfonyl, Carboxy, Aminocarbonyl, $C_1-C_4$-Alkoxycarbonyl, $C_1-C_4$-Alkyl, $C_1-C_4$-Alkoxy, Halogen, $C_1-C_4$-Alkylcarbonylamino, Benzoylamino, durch gegebenenfalls substituiertes Phenyl, gegebenenfalls substituiertes Naphthylazo-, gegebenenfalls substituiertes Phenylazo- oder durch gegebenenfalls substituiertes 2-Benzothiazolyl substituiert ist oder für Naphthyl steht, welches gegebenenfalls durch $C_1-C_4$-Alkoxy, Hydroxy, eine bis drei Sulfogruppen substituiert ist.

3. Farbstoff der Formel

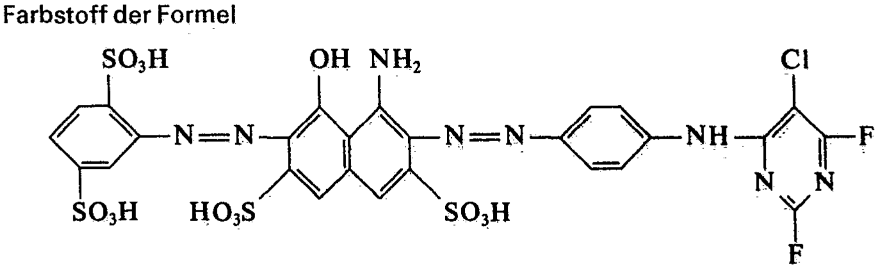

4. Verfahren zur Herstellung von Farbstoffen der Formel

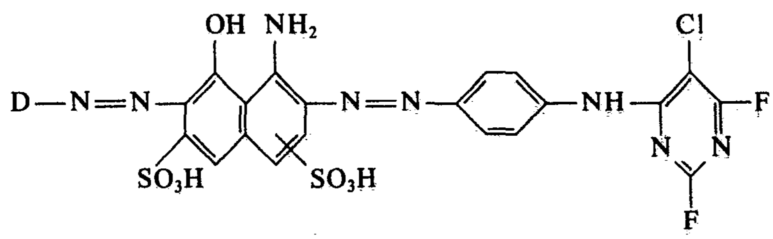

worin D die im Anspruch 1 angegebene Bedeutung besitzt, dadurch gekennzeichnet, daß man eine Verbindung der Formel

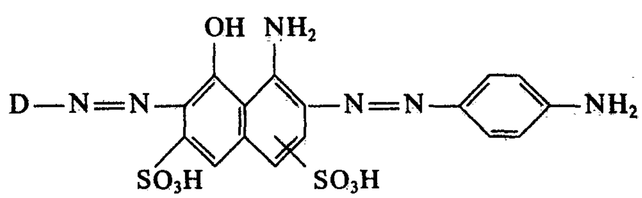

mit 2,4,6-Trifluor-5-chlorpyrimidin umsetzt.

5. Verwendung von Farbstoffen gemäß Anspruch 1 bis 3 zum Färben und Bedrucken hydroxylgruppen- und/oder stickstoffhaltiger Materialien.

## Claims

1. Dyestuffs of the general formula

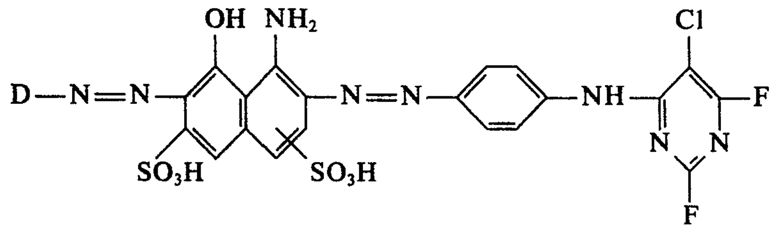

wherein

D represents on optionally substituted benzene or naphthalene radical.

2. Dyestuffs of the general formula according to Claim 1, wherein

D represents phenyl which is optionally substituted by one or two sulpho groups, aminosulphonyl, carboxyl, aminocarbonyl, $C_1-C_4$-alkoxycarbonyl, $C_1-C_4$-alkyl, $C_1-C_4$-alkoxy, halogen, $C_1-C_4$-alkylcarbonylamino, benzoylamino, by optionally substituted phenyl, optionally substituted naphthylazo optionally substituted phenylazo or by optionally substituted 2-benzothiazolyl or represents naphthyl which is optionally substituted by $C_1-C_4$-alkoxy, hydroxyl or one to three sulpho groups.

3. Dyestuff of the formula

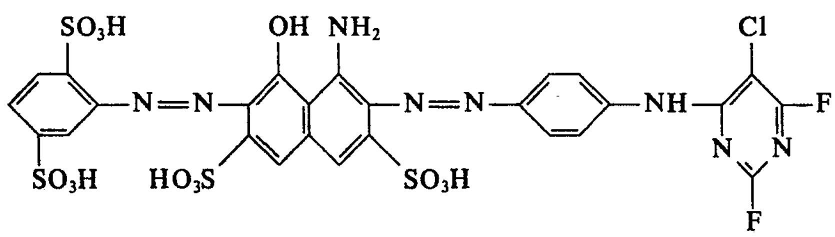

4. Process for the preparation of dyestuffs of the formula

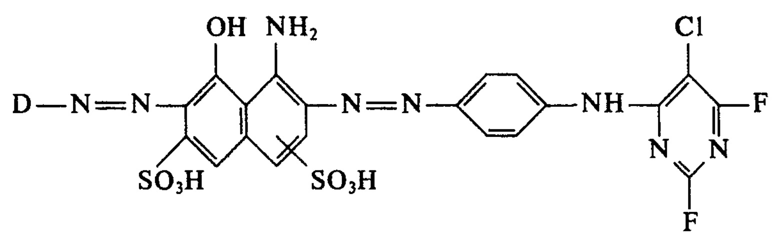

wherein

D has the meaning indicated in Claim 1,

characterised in that a compound of the formula

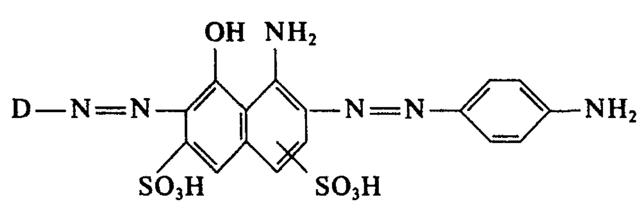

is reacted with 2,4,6-trifluoro-5-chloro-pyrimidine.

5. Use of dyestuffs according to Claim 1 to 3 for dyeing and printing materials containing hydroxyl groups and/or nitrogen.

**Revendications**

1. Colorants de formule générale:

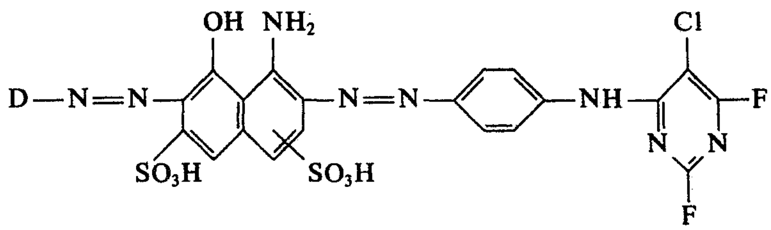

dans laquelle

D représente un radical benzène ou naphtalène éventuellement substitué.

2. Colorants de formule générale selon la revendication 1, dans laquelle

D représente un phényle qui est éventuellement substitué par un ou deux groupes sulfo, aminosulfonyle, carboxy, aminocarbonyle, alcoxy($C_1-C_4$)carbonyle, alcoyle en $C_1-C_4$, alcoxy en $C_1-C_4$, halogène, alcoyl($C_1-C_4$)carbonylamino, benzoylamino, par un phényle éventuellement substitué, par un naphtylazo éventuellement substitué, un phénylazo éventuellement substitué ou par un 2-benzothiazolyle éventuellement substitué, ou représente un naphtyle qui éventuellement est substitué par un alcoxy en $C_1-C_4$, hydroxy, un à trois groupes sulfo.

3. Colorant de formule:

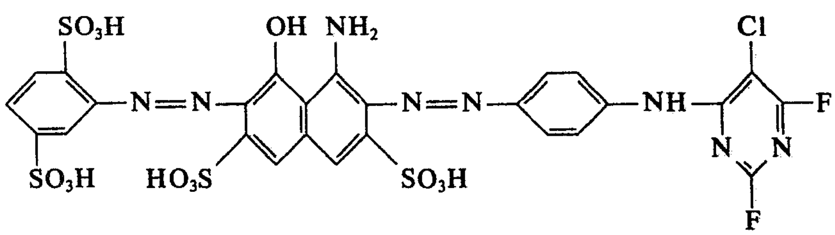

4. Procédé de préparation de colorants de formule:

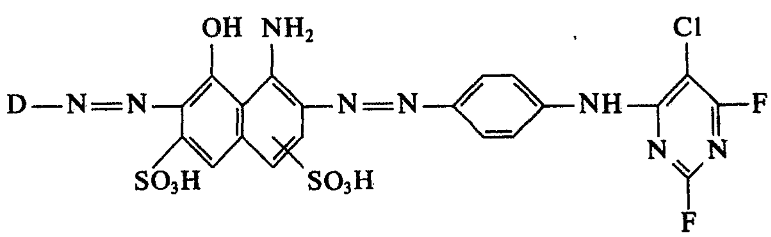

dans laquelle D possède la signification indiquée à la revendication 1, caractérisé en ce qu'on fait réagir un composé de formule:

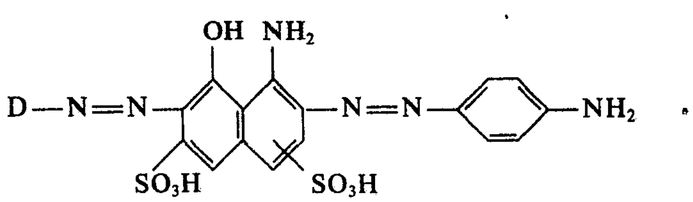

avec de la 2,4,6-trifluoro-5-chloropyrimidine.

5. Utilisation des colorants selon les revendications 1 à 3 pour la teinture et l'impression de matières renfermant des groupes hydroxyle et/ou de l'azote.